# EUROPEAN PATENT APPLICATION

(11) **EP 2 615 671 A1**
(43) Date of publication of application: **17.07.2013**
(21) Application number: 10856863.5
(22) Date of filing: 10.09.2010
(51) Int. Cl.: H01M 4/36

(54) **LITHIUM SALT-GRAPHENE-CONTAINING COMPOSITE MATERIAL AND PREPARATION METHOD THEREOF**

(71) Applicant: Ocean's King Lighting Science&Technology Co., Ltd., Guangdong 518054 (CN)
(72) Inventor: ZHOU, Mingjie, Guangdong 518054 (CN); PAN, Jun, Guangdong 518054 (CN); WANG, Yaobing, Guangdong 518054 (CN)
(74) Representative: Johnson, Richard Alan
(86) International application number: PCT/CN2010/076786
(87) International publication number: WO 2012/031401

(57) **Abstract**

A lithium salt-graphene-containing composite material and its preparation method are provided. The composite material has the microstructure which comprises carbon nanoparticles, lithium salt nanocrystals and graphene, wherein the surface of lithium salt nanocrystals is coated with carbon nanoparticles and graphene. The preparation method comprises concentrating and drying a mixed solution, then calcinating the solid. The lithium salt-graphene-containing composite material has excellent electric performance and stability since the problem of low electric performance resulted from carbon coating on the surface of lithium salt or coating imperfection resulted from graphene coating on the surface of lithium salt is effectively solved. For the more uniform and compacted combination between graphene and lithium salt nanocrystals, the graphene will not fall off and the composite material has a high capacity ratio, energy density and conductivity. Furthermore, particle agglomeration and growing up are reduced in the process of calcination. The technique of the method is simple, low cost and fit for industrialized production.

## Description

### FIELD OF THE INVENTION

The present invention relates to electrode material technology, more particularly, relates to a lithium salt-graphene-containing composite material and preparation method thereof.

### BACKGROUND OF THE INVENTION

Since Andre K. Geim and co-workers at Manchester University in the United Kingdom successfully produced graphene material in 2004, graphene material has attracted considerable attention owing to its unique structure and photoelectrical properties.

In 1997, with the help of Professor. J.B.Goodenough at Texas State University in the United States of America, A.K.Padhi studied synthesis and electrochemical performance of some kinds of lithium transition metal phosphate system material, discovered that olivine LiFePO₄ can be used as lithium battery cathode material, because of the capability of deintercalating lithium ions reversibly. This discovery quickly attracted considerable attention of people in the international electrochemistry community. The olivine LiFePO₄ has such advantages: (1) in the olivine structure, all cations combine with P⁵⁺ by strong covalent bond to form (PO⁴)³⁺, O atoms are difficult to escape even in the fully charged state, improving the stability and security of the material; (2) theoretical specific capacitance of LiFePO₄ is 170mAh·g⁻¹, and the actual specific capacitance can be up to 140mAh·g⁻¹ in the case of low currents charge-discharge, and the structure will not be destroyed, the specific capacitance is comparable to LiCoO₂; (3) because the redox couple is Fe³⁺/Fe²⁺, when the battery is fully charged, the reaction activity with the organic electrolyte is low, therefore the security performance is good; (4) when the battery is fully charged, the volume of the cathode material contract by 6.8%, which just compensate for the volumetric expansion of carbon anode, the cycle performance is superior. Such features of olivine LiFePO₄ and advantages like low-cost, environmental friendly, flat discharge curve make it have great market prospects in a variety of mobile power fields, especially in the field of powder source for electric cars, and make LiFePO₄ to be new generation of cathode material of lithium ion battery which has the most potential to be developed and used.

However, LiFePO₄ has a fatal defection: LiFePO₄ has a low electrical conductivity, which is only about 10⁻⁸S·cm⁻¹ at room temperature, whereas LiCoO₂ is about 10⁻³S·cm⁻¹, LiMn₂O₄ is about 10⁻⁵S·cm⁻¹. Such a low electrical conductivity leads the discharge capacity of LiFePO₄ to reduce sharply with the increasing discharge current, when LiFePO₄ is used as the cathode material. In the process of deintercalation, lithium ions cross the phase interface of LiFePO₄/FePO₄ at a low migration speed, in the process of lithium intercalation, the area of LiFePO₄ phase continuously decreases, thus, in the case of high currents density discharge, the amount of lithium ions passing through the phase interface is insufficient to sustain large current, resulting in reduction in reversible capacity.

There are many ways for producing LiFePO₄ known in the art, (1) high-temperature solid-phase method; (2) carbon thermal reduction method; (3) sol-gel method; (4) hydrothermal method; (5) coprecipitation method; (6) microwave method. But many methods fail to solve the problem of low conductivity in LiFePO₄. Similarly, other lithium salts such as lithium manganate, lithium vanadate, and lithium metal oxide salts are also have the same problem, the conductivity is relatively low, and needs to be improved.

Currently, most of the lithium salt materials have the problem of low conductivity, which seriously affect the performance of the products. So far, developed and production-proven process methods are relatively focused on LiFePO₄. But in general, the improvement of the conductivity is limited, or to increase the conductivity, but bringing with other properties of the material, such as low material stability, etc..

### SUMMARY OF THE INVENTION

To overcome said disadvantages in prior art, the present invention provides a lithium salt-graphene-containing composite material with high conductivity, great specific capacitance, stable structure and performance.

The other purpose of the present invention is to provide a preparation method of lithium salt-graphene-containing composite material.

To achieve said purposes, the technical solution of the present invention is:

a lithium salt-graphene-containing composite material, said composite material has particulate structure comprising carbon nanoparticles, lithium salt nanocrystals and graphene; in said particulate structure, said carbon nanoparticles and graphene are coated on the surface of said lithium salt nanocrystals.

And, a preparation method of lithium salt-graphene-containing composite material, comprising:

obtaining nano lithium salt precursor, graphene oxide solution and organic compound used as source of carbon;

mixing said nano lithium salt precursor with organic compound used as source of carbon, then adding graphene oxide solution to form mixed solution; or mixing and drying said nano lithium salt precursor and organic compound used as source of carbon, heating to carbonize organic compound used as source of carbon, after that, adding graphene oxide solution to form mixed solution;

concentrating and drying said mixed solution to obtain solid mixture;

placing said solid mixture in reducing atmosphere and calcining, cooling, grinding, said lithium salt-graphene-containing composite material is obtained, said lithium salt-graphene-containing composite material has particulate structure formed by coating the surface of lithium salt nanocrystals with carbon nanoparticles and graphene.

In said lithium salt-graphene-containing composite material, the surface of lithium salt nanocrystals is coated with carbon nanoparticles and graphene, solving effectively the problem of low electrical conductivity resulted from carbon coating on the surface of lithium salt or coating imperfection resulted from graphene coating on the surface of lithium salt, endowing the lithium salt-graphene-containing composite material with excellent stability and electrical conductivity, making the graphene to combine with lithium salts more uniformly and tightly, and not to fall off, so the composite material has great specific capacitance, high energy density and electrical conductivity. At the same time, aggregation and growth of particles caused by high-temperature calcination are mitigated, helping to give full play to the capacity. The process for producing lithium salt-graphene-containing composite material just needs to mix lithium salt with organic compound used as source of carbon and then with graphene oxide, and then reducing and crystallizing. Hence, the preparation method is simple, low cost and fit for industrialized production.

### BRIEF DESCRIPTION OF THE DRAWINGS

Further description of the present invention will be illustrated, which combined with embodiments in the drawings:

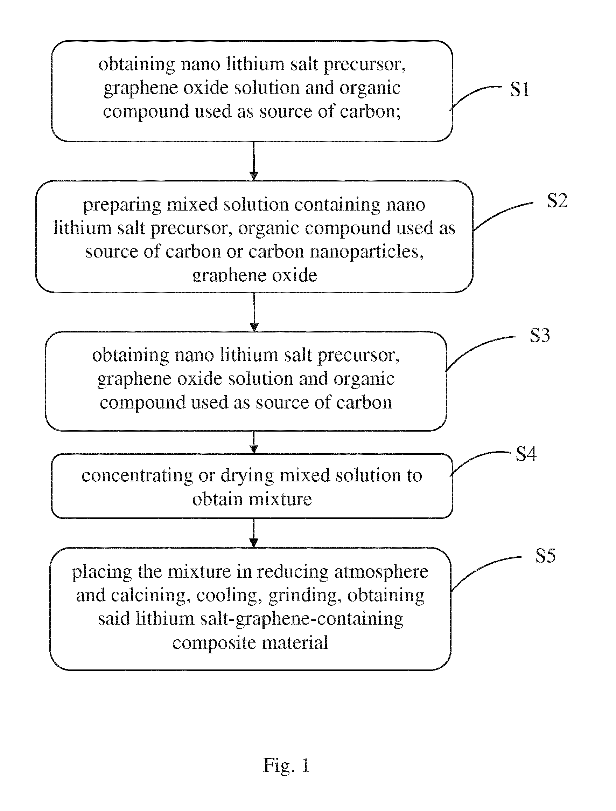

Fig. 1 is flow chart of the preparation method of lithium salt-graphene-containing composite material of the present invention;

Fig. 2 is an X-ray diffraction pattern of the lithium salt-graphene-containing composite material of Example 1 of the present invention;

Fig. 3 is a scanning electron microscope image of the lithium salt-graphene-containing composite material of Example 1 of the present invention;

Fig. 4 is the initial five charge-discharge curves of lithium salt-graphene-containing composite material of Example 1 of the present invention at 0.2C/1C.

### DETAILED DESCRIPTION OF ILLUSTRATED EMBODIMENTS

Further description of the present invention will be illustrated, which combined with embodiments in the drawings, in order to make the purpose, the technical solution and the advantages clearer. While the present invention has been described with reference to particular embodiments, it will be understood that the embodiments are illustrative and that the invention scope is not so limited.

The present invention provides a lithium salt-graphene-containing composite material, said composite material has particulate structure comprising carbon nanoparticles, lithium salt nanocrystals and graphene; in said particulate structure, said carbon nanoparticles and graphene are coated on the surface of said lithium salt nanocrystals.

Furthermore, the surface of said lithium salt nanocrystals is coated with said carbon nanoparticles, the surface of carbon nanoparticles is coated with said graphene; or, the surface of said lithium salt nanocrystals is coated with said graphene, the surface of graphene is coated with said carbon nanoparticles; or, said carbon nanoparticles and graphene dope with each other to form mixed layer, the salt on the surface of said lithium salt nanocrystals is coated with said mixed layer of carbon nanoparticles and graphene.

Furthermore, in said particulate structure of lithium salt-graphene-containing composite material, said graphene preferably accounts for 0.01 to 99% of the total mass of said particulate structure, said lithium salt nanocrystals accounts for 0.01 to 99% of the total particles mass of said particulate structure; mass fraction of said carbon nanoparticles in said particulate structure is preferably larger than 0, less than or equal to 10%.

Furthermore, said particulate structure has porous structure, said porous structure distribute over the coating layer consisting of carbon nanoparticles and/or carbon particles, graphene, which is on the surface of lithium salt nanocrystals; particle size of said particulate structure is in preferred range of 0.1µm to 5µm.

Furthermore, said graphene is preferably single-layer graphene or graphene aggregate layers. Graphene aggregate layers are preferably multilayer graphene sheets having 2 to 10 layers. Wherein, single-layer graphite of single-layer graphene has large specific surface area, excellent electrical conductivity, thermal conductivity, low coefficient of thermal expansion, and exhibit a range of advantages such as: 1, high strength, Young's modulus is greater than 1100 GPa, breaking strength is greater than 125GPa; 2, high thermal conductivity, thermal conductivity coefficient is greater than 5,000 W/mK; 3, high electrical conductivity, the transmission rate of carriers is about 200,000 cm²/V*s for instance; 4, large specific surface area, the theoretical value is 2,630 m²/g. Due the close relationship between the properties and thickness of graphene, graphene aggregate layers can be used instead of single layer graphene, depending on the actual needs. Preferably, said lithium salt nanocrystals is at least one of LiMnO₂, LiNiO₂, LiMn₂O₄, LiNi_{1/3}Mn_{1/3}Co_{1/3}O₂, LiMXO₄, Li₃M₂(XO₄)₃ and LiVPO₄F, wherein, in said LiMXO₄, Li₃M₂(XO₄)₃, M is at least one element of Fe, Co, Mn and V, X is P or Si.

In the lithium salt-graphene-containing composite material, the surface of lithium salt nanocrystals is coated with carbon nanoparticles and graphene, solving effectively the problem of low electrical conductivity resulted from carbon coating on the surface of lithium salt or coating imperfection resulted from graphene coating on the surface of lithium salt, endowing the lithium salt-graphene-containing composite material with excellent stability and electrical conductivity, making the graphene to combine with lithium salts more uniformly and tightly, and not to fall off, so the composite material has great specific capacitance, high energy density and electrical conductivity. At the same time, aggregation and growth of particles caused by high-temperature calcination are mitigated, helping to give full play to the capacity.

Moreover, the present invention also provides preparation method of said lithium salt-graphene-containing composite material, comprising:

S1. obtaining nano lithium salt precursor, graphene oxide solution and organic compound used as source of carbon;

S2. mixing said nano lithium salt precursor with organic compound used as source of carbon, then adding graphene oxide solution to form mixed solution; or mixing and drying said nano lithium salt precursor and organic compound used as source of carbon, heating to carbonize organic compound used as source of carbon, after that, adding graphene oxide solution to form mixed solution;

S3. concentrating and drying said mixed solution to obtain solid mixture;

placing said solid mixture in reducing atmosphere and calcining, cooling, grinding, said lithium salt-graphene-containing composite material is obtained, said lithium salt-graphene-containing composite material has particulate structure formed by coating the surface of lithium salt nanocrystals with carbon nanoparticles and graphene.

In step S1 of said preparation method of lithium salt-graphene-containing composite material, the obtaining of nano lithium salt precursor preferably comprises processing steps as follows:

S 11. selecting compounds used as source of each element according to the molar ratio of corresponding elements in the chemical formula of nano lithium salt precursor, said compounds used as source of elements comprise at least one of compound used as source of iron, compound used as source of manganese, compound used as source of vanadium, compound used as source of cobalt, compound used as source of manganese cobalt nickel, compound used as source of nickel, compound used as source of phosphorus, compound used as source of silicon, and compound used as source of lithium, said lithium salt nanocrystals comprise at least one of that having chemical formula of LiMnO₂, LiNiO₂, LiMn₂O₄,LiNi_{1/3}Mn_{1/3}Co_{1/3}O₂, LiMXO₄, Li₃M₂(XO₄)₃ and LiVPO₄F, wherein, M in said LiMXO₄, Li₃M₂(XO₄)₃ is at least one element of Fe, Co, Mn and V, X is P or Si;

S12. mixing compounds used as source of each element and reacting to obtain said nano lithium salt precursor;

In said step S11 of preparation method of lithium salt-graphene-containing composite material, compound used as source of lithium is a necessary component, but compound used as source of iron, compound used as source of manganese, compound used as source of vanadium, compound used as source of cobalt, compound used as source of manganese cobalt nickel, compound used as source of nickel, compound used as source of phosphorus, compound used as source of silicon and other components can be selected based on the kind of nano lithium salt precursor, for example, to produce LiNi_{1/3}Mn_{1/3}Co_{1/3}O₂ lithium salt, two components of compound used as source of lithium and compound used as source of manganese cobalt nickel are preferably selected. Wherein, compound used as source of lithium is preferably at least one of lithium oxide, lithium hydroxide, lithium carbonate, lithium acetate, lithium nitrate, lithium phosphate, lithium dihydrogen phosphate and lithium fluoride; compound used as source of iron is preferably at least one of ferrous sulfate, ammonium ferrous sulfate, ammonium ferrous phosphate, ferrous phosphate, ferrous oxide, ferrous citrate, ferrous chloride, ferric oxide, ferroferric oxide, ferric phosphate, ferric sulfate and ferric citrate; compound used as source of manganese is preferably at least one of manganese carbonate, manganese sulfate, manganese nitrate, manganese chloride, manganese oxide, manganese acetate, manganese sesquioxide, manganese phosphate, manganese dioxide and manganese stearate; compound used as source of vanadium is preferably at least one of vanadium pentoxide and ammonium vanadate; compound used as source of cobalt is preferably at least one of cobalt oxalate, cobalt chloride, cobalt acetate, cobalt nitrate, cobalt sulfate, cobalt carbonate, cobalt hydroxide, cobaltic oxide and cobaltosic oxide; compound used as source of manganese cobalt nickel is preferably at least one of manganese cobalt nickel sulfate, manganese cobalt nickel acetate, manganese cobalt nickel chloride and manganese cobalt nickel nitrate; compound used as source of nickel is preferably at least one of nickel nitrate, nickel chloride, nickel sulfate, nickel acetate, nickel hydroxide and nickel sesquioxide; compound used as source of phosphorus is preferably at least one of phosphoric acid, phosphorus pentoxide, ammonium dihydrogen phosphate, diammonium hydrogen phosphate, lithium dihydrogen phosphate, ferrous ammonium phosphate and ammonium phosphate; compound used as source of silicon is preferably one or two of tetraethoxysilane and silica.

In said step S2 of preparation method of lithium salt-graphene-containing composite material, the molar ratio of said organic compound used as source of carbon to lithium element in nano lithium salt precursor is in a preferred range of 0.01 to 0.3:1, said organic compound used as source of carbon is at least one of phenyl amine, pyrrole, sucrose, glucose, polyglycol, methanol, phenol, m-dihydroxybenzene and citric acid. Herein, preferably mixing nano lithium salt precursor well with organic compound used as source of carbon, thus making organic compound used as source of carbon largely coating on the surface of nano lithium salt precursor, it is because that the ion effect of nano lithium salt precursor induce organic compound used as source of carbon to aggregate on their surface by charge. To effectively guarantee carbon particles formed after the carbonization of organic compound used as source of carbon to coat preferably on the surface of nano lithium salt precursor, it is allowed to mix nano lithium salt precursor well with organic compound used as source of carbon and dry, heat to carbonize organic compound used as source of carbon, after that, mix with graphene oxide solution to form mixed solution. Said carbonization refers to a process that heating nano lithium salt precursor and the solid mixture obtained after drying organic compound used as source of carbon in the oxygen-free atmosphere to decompose organic compound used as source of carbon, then obtaining carbon particles. The concentration of said graphene oxide solution is in the range of 0.01 to 10mol/L, the ratio of the volume of used graphene oxide solution to the mass of nano lithium salt precursor is in a preferred range of 0.05~100mL/100g of lithium salt, the concentration of said graphene oxide solution is 1g/mL. A preferred solution of the method of graphene oxide solution is: dissolving graphene oxide in water to make graphene oxide solution, water can be distilled water, deionized water, domestic water, etc. Certainly, the solvent of graphene oxide solution is not limited to water, the solvent may be ethanol, acetonitrile and other polar organic solvents. Said graphene oxide solution can be obtained by using improved hummers method, which comprising: mixing nature crystalline flake graphite, potassium permanganate and concentrated sulfuric acid according to the ratio of 1(g):3(g):23(ml), then conducting oxidation reaction for 2h at the temperature lower than 100°C, after that, rinsing with water, filtering to obtain graphene oxide. During the oxidation reaction, continuous water supply is provided to control the reaction temperature, the temperature of reaction solution is controlled to be within 100°C. The step is used for oxidizing nature insoluble graphite into soluble in order to mix well with nano lithium salt precursor in the following steps.

In said step S3 of preparation method of lithium salt-graphene-containing composite material, concentrating the obtained mixed solution, the concentration can be in such manners as heating, vacuumizing to concentrate, starchiness mixture is obtained after concentrating, then drying the obtained starchiness mixture, the concentration can be in such manners as spray drying, drying by evaporating water or vacuum drying, preferably spray drying, after being injected by spray nozzle, the slurry was instantly heated at high temperature, evaporating water, and making many nanoparticles together to form spherical particles. The preferred temperature range of concentration and drying is 40 to 100°C. Of course that, the drying can be in such manners as vacuum drying and other drying methods commonly used in the prior art. The concentration or drying is adopted for the purpose of bringing convenience to carry out the calcination in the following step.

In said step S4 of preparation method of lithium salt-graphene-containing composite material, the calcination temperature of said mixture is in a preferred range of 200 to 1000°C, the time is in a preferred range of 1 to 24h; said reducing atmosphere is reducing atmosphere of mixed gases of inert gases and H₂, reducing atmosphere of mixed gases of N₂ and H₂, or reducing atmosphere of CO, said inert gases include common Ar or other inert gases. When reducing gas is mixed gases, then the volume ratio of reducing gas to inert gases or N₂ is preferably in the range of 2% to 10%. The aforementioned mixture obtained after concentrating or drying is calcined in said reducing atmosphere, graphene oxide is reduced into graphene, in the meantime, when iron ion in the +3-valent state included in nano lithium salt precursor reduced into +2-valent state. Because the graphene structure is stable and difficult to melt, but under the calcining conditions, lithium salt is in a molten or semi-molten state, and the organic compound used as source of carbon is carbonized. In the cooling process after the calcination treatment, the lithium salt precursor in the molten or semi-molten state began to form crystals. Normally, the crystals will slowly grow up during the cooling process, but in the present example, since the organic matter is carbonized in the calcination process to generate carbon, and graphene oxide is reduced to graphene. After the lithium salt in a molten state crystallized into crystals, carbon particles or/and graphene is/are coated on the periphery of the lithium salt crystals, lithium salt crystals are coated with carbon, thus preventing further growth of the lithium salt crystals, making the size of lithium salt crystals be in nano scale, thereby effectively reducing the particle size of the lithium salt of lithium salt-graphene-containing composite material, and particle size is generally in the range of 0.1µm to 5µm.

In said preparation method of lithium salt-graphene-containing composite material, graphene do not melt during the calcination that in the temperature range of 200 to 1000°C owing to the stable performance. Thus, lithium salt-graphene-containing composite material exists in at least one form selected from the following:

the first case: After the lithium salt precursor crystals in a molten state become crystals, the surface of lithium salt nanocrystals is coated with carbon particles which is formed by carbonizing the organic compound used as source of carbon gathered on the surface of lithium salt nanocrystals, forming a layer of carbon particles on the surface of lithium salts nanocrystals, due to a special two-dimensional structure of graphene and molecular force, the graphene bonded to the surface of the layer of carbon particles, that is, the graphene is coated on the surface of the layer of carbon particles. To guarantee effectively the carbon particles produced by the carbonization of an organic compound used as source of carbon to preferentially coat on the surface of lithium salt nanocrystals, the lithium salt and the organic compound used as source of carbon can be previously mixed and dried thoroughly, carbonized, and then mixed with the graphene oxide solution.

the second case: when nano lithium salt precursor mixed with organic compound used as source of carbon and graphene oxide solution, because the graphene oxide also have polar groups, preferentially produce ion effect with nano lithium salt precursor, polymerizing the two by ion effect. Therefore, in the calcination process, lithium salt nanocrystals grow on its surface having graphene oxide as substrate, making the graphene around lithium salt nanocrystals coat on the surface of lithium salt nanocrystals, carbon particles produced by carbonization of organic compound used as source of carbon coat on the surface of graphene.

the third case: in the step S2, S3 of the above preparation method of lithium salt-graphene-containing composite material, the polar groups of graphene oxide molecule may produce ion effect simultaneously with organic compound used as source of carbon and nano lithium salt precursor. Thus, nano lithium salt precursor may polymerize with graphene oxide by ion effect while polymerize with organic compound used as source of carbon by ion effect. In the calcination process, carbon particles produced by carbonization of organic compound used as source of carbon and graphene oxide doping with each other form mixture, the mixture coats on the surface of lithium salt nanocrystals.

In any case of the above three cases, the carbonization of organic compound used as source of carbon is carried out in oxygen-free environment, as a result, CO gas is generated simultaneously when the carbonization occurs, the generated CO gas may form pores in the particulate structure of lithium salt-graphene-containing composite material while escaping, making the particulate structure of said lithium salt-graphene-containing composite material present as porous. When the lithium salt-graphene-containing composite material of the present embodiment is used to produce, the formation of the porous structure increases the contact area of electrolyte and lithium salt-graphene-containing composite material particles, which is conducive to infiltration of electrolyte and diffusion of lithium ions, giving the prepared cathode material good rate capability and excellent cycle performance.

Having at least one particulate structure of the above structures, lithium salt-graphene-containing composite material is of excellent stability, electrical conductivity, great specific capacitance and high energy density since the problem of low electrical conductivity resulted from carbon coating on the surface of lithium salt or coating imperfection resulted from graphene coating on the surface of lithium salt is effectively solved. At the same time, aggregation and growth of particles caused by high-temperature calcination are mitigated, helping to give full play to the capacity.

The above process for producing lithium salt-graphene-containing composite material just needs to mix lithium salt with organic compound used as source of carbon and then with graphene oxide, and then reducing and crystallizing. Hence, the preparation method is simple, low cost and fit for industrialized production.

Just because the lithium salt-graphene-containing composite material is of excellent stability and electrical conductivity, the composite material can be widely used in the field of battery electrode material.

The lithium salt-graphene-containing composite material of different composition, preparation method and properties are illustrated in the following embodiments.

Example 1

The preparation method of nano-scaled LiFePO₄ lithium salt crystals-graphene composite coated with carbon, comprising:

(1) preparation of nano lithium salt precursor: dissolving 1 mol of NH₄H₂PO₄ and 1 mol of FeSO₄·7H₂O in deionized water to form 0.5mol/L mixture having homogeneous distribution, adding slowly 1mol of LiOH solution into the mixture while stirring, and supplying nitrogen as protection gas to prevent iron ion in the +2-valent state from oxidizing, grey precipitates are obtained, after the addition, continue to stir for 5h, centrifuging and rinsing, collecting precipitates for later use.

(2) graphene oxide-water system: the preparation method of graphene oxide is based on the improved hummers method (J. Am. Chem. Soc., 1958, 80 (6), 1339-1339, Preparation of Graphitic Oxide), then preparing 1g/mL of aqueous solution of graphene oxide to obtain brown solution system;

(3) nano lithium salt precursor-graphene oxide system: then mixing 100g of lithium salt precursor, 20g of sucrose and graphene oxide solution system accounting for 8% of the mass ratio of lithium salt, vigorously stirring to homogeneity;

(4) drying and removing water to form lithium salt precursor-graphene composite: drying and removing water from the system obtained from said (3) to obtain solid composite material;

(5) reducing at high temperature: placing the system obtained from the above (4) under high temperature, supplying Ar₂/H₂ gas with a volume ratio of 2%, then heating the powders to 1000°C for calcination, reducing for 2h, crystallizing, cooling to obtain lithium salt-graphene composite material containing LiFePO₄.

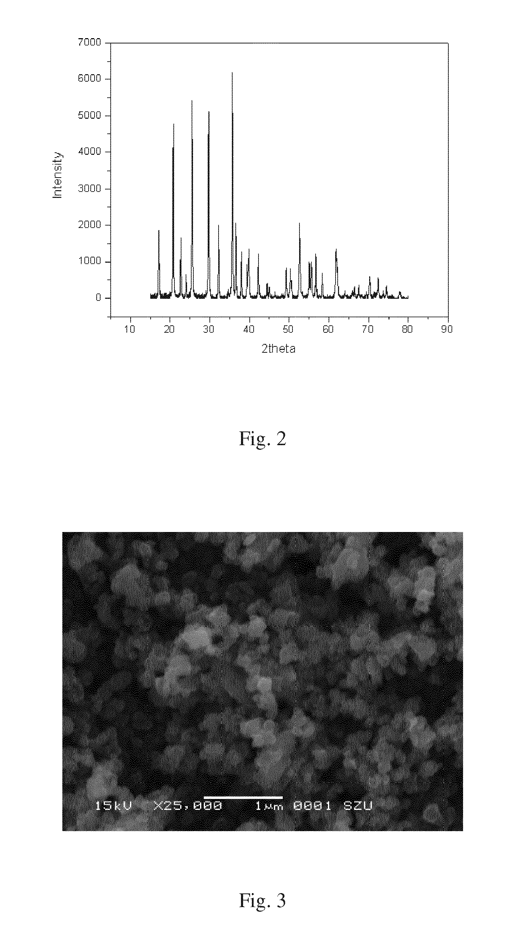

The lithium salt-graphene composite material containing LiFePO₄ of the present embodiment is tested on X-ray diffraction, the results as shown in Fig. 2. It can be seen from Fig. 2 that, diffraction peaks are sharp with respect to JPCPDS (40-1499) standard card, the lithium salt-graphene composite material the material have well-crystallized, integrity and single olivine structure. The figure also indicated that the addition of carbon and graphene do not affect the crystal structure.

Scanning electron microscopy image of the lithium salt-graphene composite material containing LiFePO₄ of the present embodiment is shown in Fig. 3. It can be seen from the figure that, particles have small particle size of about 100nm, and exhibit sphere shape. Owing to the presence of carbon, aggregation and growth of particles are mitigated during the high-temperature calcination.

The process of discharging test on lithium salt-graphene composite material containing LiFePO₄ of the present embodiment comprises:

battery assembly and performance test: weighing lithium salt-graphene composite material containing LiFePO₄ of the present embodiment, acetylene black and polyvinylidene fluoride (PVDF) according to the mass ratio of 84:8:8, mixing well, then coating on aluminium foil to manufacturing positive plate, next, using metal lithium as anode, polypropylene thin film as separator, 1mol/L of LiPF₆ mixed solution of ethylene carbonate (EC) and dimethyl carbonate (DMC) (volume ratio 1:1) as electrolyte, in an argon atmosphere glove box, when moisture content is lower than 1.0ppm, assembling button battery in order, allow the battery to stand for 12h to be tested.

Charge-discharge system of the battery is: when charging, setting charge-discharge current according to the specific capacitance of the battery and charge-discharge rate, constantly charging-discharging, when the voltage of the battery is up to 4.2V, allow the system to rest for 10min. In the present experiment, the charge is 0.2C, the discharge current is 1C, during the discharging, the circuit will automatically terminate the discharge (1C=170mA/g) when the battery voltage drops to 2.4V, and then enter the next cycle.

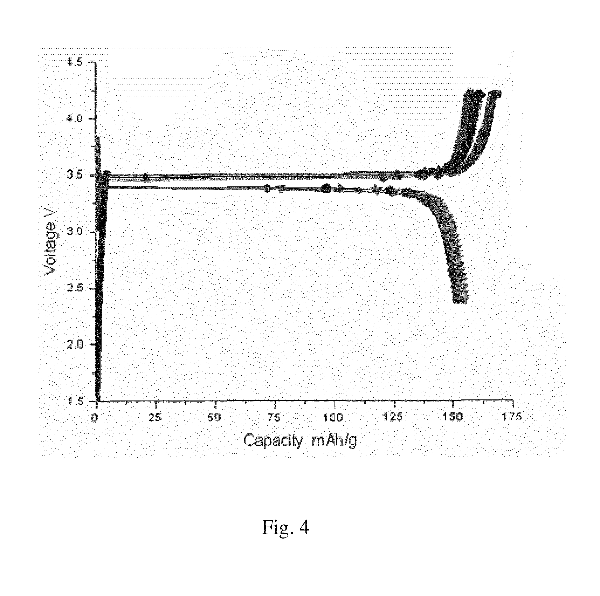

The initial five charge-discharge curves of the LiFePO₄ lithium salt crystals-graphene composite of the present embodiment subjected to the above discharge experiment are shown in Fig. 4. It can be seen from the figure that, under the condition of 1C, the initial discharge capacity is 151mAh/g which is very close to the theoretical capacity 170mAh/g. In addition, the good repeatability of the initial five charge-discharge curves indicate that material have good rate capability and cycle performance.

Example 2

The preparation method of nano-scaled LiFePO₄ lithium salt nanocrystals-graphene composite coated with carbon, comprising:

(1) preparation of nano iron lithium phosphate coated with carbon material: dissolving 1 mol of NH₄H₂PO₄ and 1 mol of FeSO₄·7H₂O in deionized water to form 0.5mol/L mixture having homogeneous distribution, adding slowly 1mol of LiOH solution into the mixture while stirring, and supplying nitrogen as protection gas to prevent iron ion in the +2-valent state from oxidizing, grey precipitates are obtained, after the addition, continue to stir for 5h, rinsing with water and filtering, after filtering, adding the aforementioned organic compound used as source of carbon into precipitates, mixing well, calcining at 500° to 800°C in inert atmosphere for 20h, iron lithium phosphate coated with carbon material is obtained.

(2) preparation of graphene oxide-water system: the same as step (2) of Example 1;

(3) preparation of lithium salt-graphene oxide system: then mixing 100g of nano iron lithium phosphate coated with carbon material and graphene oxide solution system accounting for 10% of the mass ratio of lithium salt, vigorously stirring to homogeneity;

(4) drying and removing water to form lithium salt -graphene composite: the same as step (4) of Example 1;

(5) reducing at high temperature: placing the system obtained from the above (4) under high temperature, supplying N₂/H₂ gas with a volume ratio of 10%, then heating the powders to 200°C for calcination, reducing for 24h, crystallizing to obtain lithium salt-graphene composite material containing LiFePO₄.

Example 3

The preparation method of nano-scaled Li₃V₂(PO₄)₃ lithium salt nanocrystals-graphene composite coated with carbon, comprising:

(1) preparation of nano lithium salt precursor: dissolving 1.5 mol of NH₄H₂PO₄ and 1 mol of NH₄VO₃ in deionized water to form 0.5mol/L mixture having homogeneous distribution, adding slowly 1.5mol of LiOH solution into the mixture while stirring, grey precipitates are obtained, after the addition, centrifuging and rinsing, collecting precipitates for later use.

(2) graphene oxide-water system: the preparation method of graphene oxide is based on the improved hummers method (J. Am. Chem. Soc., 1958, 80 (6), 1339-1339, Preparation of Graphitic Oxide), then dissolving 10g of graphene oxide in 10mL of water to form 1g/mL of water-soluble liquid, obtaining brown solution system;

(3) nano lithium salt precursor-graphene oxide system: then mixing 100g of lithium salt precursor, 10g of phenol, 20g of m- dihydroxybenzene and graphene oxide solution system accounting for 8% of the mass ratio of lithium salt, vigorously stirring to homogeneity;

(4) drying and removing water to form nano lithium salt precursor-graphene composite: drying and removing water from the system obtained from said (3) to obtain solid composite material;

(5) reducing at high temperature: placing the system obtained from the above (4) under high temperature, supplying CO gas, then heating the powders to 600°C for calcination, reducing for 10h, crystallizing, cooling to obtain lithium salt-graphene composite material containing Li₃V₂(PO₄)₃.

Example 4

The preparation method of nano-scaled LiFePO₄ lithium salt nanocrystals-graphene composite coated with carbon, comprising:

(1) preparation of nano lithium salt precursor: dissolving acetates of manganese, nickel, cobalt and lithium according to the molar ratio of 0.33:0.33:0.33:1 in deionized water, herein, 1mol of lithium acetate.

(2) graphene oxide-water system: the preparation method of graphene oxide is based on the improved hummers method (J. Am. Chem. Soc., 1958, 80 (6), 1339-1339, Preparation of Graphitic Oxide), then dissolving 10g of graphene oxide in 10mL of water to form 1g/mL of water-soluble liquid, obtaining brown solution system;

(3) adding 0.1mol of pyrrole into step (1), mixing well;

(4) preparation of nano lithium salt precursor-organics-graphene oxide system: adding graphene oxide solution system accounting for 5% of the mass ratio of lithium salt into step (3), vigorously stirring to homogeneity;

(5) drying to form lithium salt precursor, organics and graphene oxide powders: placing the reaction system into a water bath at a constant temperature of 60°C, heating until solution becomes colloid;

(6) thermal treatment at high temperature: placing colloid obtained from step (5) into muffle furnace, supplying CO gas, in the meantime, heating to 800°C and calcining for 20h to obtain lithium salt-graphene composite material containing LiMn_{1/3}Ni_{1/3}Co_{1/3}O₂.

Example 5

The preparation method of nano-scaled LiMn₂O₄ lithium salt nanocrystals-graphene composite coated with carbon, comprising:

(1) preparation of lithium salt precursor: weighing lithium acetate and manganese acetate according to the stoichiometric ratio of 1:2 and dissolving in deionized water, herein, 1mol of lithium acetate;

(2) graphene oxide-water system: the preparation method of graphene oxide is based on the improved hummers method (J. Am. Chem. Soc., 1958, 80 (6), 1339-1339, Preparation of Graphitic Oxide), then dissolving 10g of graphene oxide in 10mL of water to form 1g/mL of water-soluble liquid, obtaining brown solution system;

(3) adding 0.2mol of citrate acid into step (1), mixing well;

(4) preparation of lithium salt precursor-organics-graphene oxide system: adding graphene oxide solution system accounting for 8% of the mass ratio of lithium salt into step (3), vigorously stirring to homogeneity;

(5) drying to form lithium salt precursor, organics and graphene oxide powders: placing the reaction system into a water bath at a constant temperature of 100°C, heating until solution becomes colloid;

(6) thermal treatment at high temperature: placing colloid obtained from step (5) into muffle furnace, supplying N₂/H₂ gas, in the meantime, heating to 400°C and calcining for 23h to obtain lithium salt-graphene composite material containing LiMn₂O₄.

While the present invention has been described with reference to particular embodiments, it will be understood that the embodiments are illustrative and that the invention scope is not so limited. Alternative embodiments of the present invention will become apparent to those having ordinary skill in the art to which the present invention pertains. Such alternate embodiments are considered to be encompassed within the spirit and scope of the present invention. Accordingly, the scope of the present invention is described by the appended claims and is supported by the foregoing description.

## Claims

1. A lithium salt-graphene-containing composite material, wherein said composite material has particulate structure comprising carbon nanoparticles, lithium salt nanocrystals and graphene; in said particulate structure, said carbon nanoparticles and graphene are coated on the surface of said lithium salt nanocrystals.

2. The lithium salt-graphene-containing composite material according to claim 1, wherein in said particulate structure, the surface of said lithium salt nanocrystals is coated with said carbon nanoparticles, the surface of carbon nanoparticles is coated with said graphene; or, the surface of said lithium salt nanocrystals is coated with said graphene, the surface of graphene is coated with said carbon nanoparticles; or, said carbon nanoparticles and graphene dope with each other to form a mixed layer, the salt on the surface of said lithium salt nanocrystals is coated with said mixed layer of carbon nanoparticles and graphene.

3. The lithium salt-graphene-containing composite material according to claim 1, wherein in said particulate structure, said graphene accounts for 0.01 to 99% of the total mass of said particulate structure, said lithium salt nanocrystals accounts for 0.01 to 99% of the total mass of said particulate structure; mass fraction of said carbon nanoparticles in said particulate structure is larger than 0, less than or equal to 10%.

4. The lithium salt-graphene-containing composite material according to claim 1, wherein said particulate structure has porous structure, said porous structure distribute over the coating layer consisting of carbon nanoparticles and graphene, which is on the surface of lithium salt nanocrystals;
particle size of said particulate structure is in the range of 0.1µm to 5µm.

5. The lithium salt-graphene-containing composite material according to claim 1, wherein said graphene is single layer graphene or graphene aggregate layers ;
said lithium salt nanocrystals comprise at least one of LiMnO₂, LiNiO₂, LiMn₂O₄,LiN_{1/3}Mn_{1/3}Co_{1/3}O₂, LiMXO₄, Li₃M₂(XO₄)₃ and LiVPO₄F, wherein, in said LiMXO₄ and Li₃M₂(XO₄)₃, M is at least one element of Fe, Co, Mn and V, X is P or Si.

6. A preparation method of lithium salt-graphene-containing composite material, comprising:
obtaining nano lithium salt precursor, graphene oxide solution and organic compound used as source of carbon;
mixing said nano lithium salt precursor with organic compound used as source of carbon, then adding graphene oxide solution to form mixed solution; or mixing and drying said nano lithium salt precursor and organic compound used as source of carbon, heating to carbonize organic compound used as source of carbon, after that, adding graphene oxide solution to form mixed solution;
concentrating and drying said mixed solution to obtain solid mixture;
placing said solid mixture in reducing atmosphere and calcining, cooling, grinding, said lithium salt-graphene-containing composite material is obtained, said lithium salt-graphene-containing composite material has particulate structure formed by coating the surface of lithium salt nanocrystals with carbon nanoparticles and graphene.

7. The preparation method of lithium salt-graphene-containing composite material according to claim 6, wherein said nano lithium salt precursor comprise at least one of LiMnO₂, LiNiO₂, LiMn₂O₄,LiNi_{1/3}Mn_{1/3}Co_{1/3}O₂, LiMXO₄, Li₃M₂(XO₄)₃ and LiVPO₄F, wherein in said LiMXO₄ and Li₃M₂(XO₄)₃, M is at least one element of Fe, Co, Mn and V, X is P or Si.

8. The preparation method of lithium salt-graphene-containing composite material according to claim 7, wherein said organic compound used as source of carbon is at least one of phenyl amine, pyrrole, sucrose, glucose, polyglycol, methanol, phenol, m-dihydroxybenzene and citric acid; molar ratio of said organic compound used as source of carbon to lithium element in lithium salt nanocrystals is in the range of 0.01 to 0.3:1.

9. The preparation method of lithium salt-graphene-containing composite material according to claim 6, wherein the ratio of the volume of used graphene oxide solution to the mass of nano lithium salt precursor is in the range of 0.01 to 990000mL/100g, the concentration of said graphene oxide solution is 1g/mL.

10. The preparation method of lithium salt-graphene-containing composite material according to claim 6, wherein:
the calcination temperature is in the range of 200°C to 1000°C, and time is in the range of 1h to 20h;
said reducing atmosphere is reducing atmosphere of mixed gases of inert gases and H₂, reducing atmosphere of mixed gases of N₂ and H₂, or reducing atmosphere of CO.
